# FASCICULE DE BREVET EUROPEEN

(11) **EP 0 834 532 B1**
(45) Date de publication et mention de la délivrance du brevet: **05.02.2003**
(21) Numéro de dépôt: 97420186.5
(22) Date de dépôt: 06.10.1997
(51) Int. Cl.: C08K 5/00, F42B 5/30

(54) **Pièce en matériau thermoplastique photodégradable**
Teil aus photozersetzbarem thermoplastischem Material
Part made from photodegradable thermoplastic material

(30) Priorité: 04.10.1996 FR 9612332
(43) Date de publication de la demande: 08.04.1998
(73) Titulaire: Cheddite France, 26500 Bourg les Valence (FR)
(72) Inventeur: Baud, Jean-Jacques, 07130 Saint-Peray (FR); Noharet, Jean, 26000 Valence (FR)
(74) Mandataire: Guerre, Dominique

(56) Documents cités:
- EP-A- 0 181 473
- DE-A- 2 317 529
- FR-A- 2 160 945
- US-A- 3 592 792

## Description

La présente invention concerne une pièce épaisse, obtenue en tout ou partie à partir d'un matériau thermoplastique photodégradable.

Par pièce épaisse selon l'invention, on comprend une pièce opaque dont la ou les parties constituées par le matériau précité, présentent une épaisseur d'au moins 100 µm, de préférence d'au moins 200 µm, par opposition à un film.

L'invention concerne plus particulièrement les pièces dites de sécurité, c'est-à-dire les pièces dont les défaillances mécaniques, liées au caractère photodégradable du matériau la constituant, peuvent entraîner, au cours de leur utilisation, des accidents de personnes et/ou endommagements graves de matériel. Dans la description détaillée de l'invention et son illustration qui suivront, il sera fait référence à une douille pour cartouche de chasse ou de sport. Dans le même domaine d'application, il peut s'agir de tout autre élément constitutif de cartouches tel que bourre et projectile. Mais une pièce de l'invention peut bien entendu être destinée à de nombreuses autres applications, et à titre d'exemple, dans le domaine de l'industrie automobile, de la signalisation, des industries d'équipements sportifs et des industries d'équipements agricoles.

Le matériau constitutif d'une pièce de l'invention comprend une matrice polyoléfinique, au moins un agent colorant conférant à la matrice une couleur initiale, et un agent photodégradant de ladite matrice polyoléfinique, ledit agent photodégradant comprenant au moins un agent photoamorceur et un ligand.

Conformément au document EP-A-0 181 473, on connaît des douilles pour cartouches obtenues à partir d'un matériau polyéthylénique photodégradable, ledit matériau comprenant un agent colorant et un agent photodégradant qui consiste en un sel organométallique. Après usage, ces douilles sont photodégradées dans l'environnement sur le sol où elles sont souvent rejetées. Les propriétés mécaniques des douilles, avant usage, ne devraient pas, en théorie, être altérées, à la condition de protéger lesdites douilles de la lumière de façon à les préserver d'une photodégradation prématurée.

Cette solution présente un inconvénient majeur qui réside dans le risque encouru par l'utilisateur d'une cartouche qui aurait été exposée à la lumière ou dont la douille aurait elle-même été exposée à la lumière, au cours de son stockage, ou par l'utilisateur lui-même avant usage.

En effet, même partiellement photodégradée, l'utilisation d'une cartouche dont les propriétés mécaniques ont été affaiblies est dangereuse, car après le départ de la cartouche, hors du canon du fusil, ce dernier peut rester bouché par une partie de la cartouche endommagée, notamment par le tube de polyéthylène, et exploser lors du départ de la cartouche suivante.

La Demanderesse a eu l'idée d'incorporer dans le matériau thermoplastique photodégradable comprenant une matrice polyoléfinique, un témoin ou sonde qui est compatible avec les constituants du matériau et l'épaisseur de la pièce, ce témoin ou sonde permettant de détecter par simple visualisation à l'oeil nu, l'état d'avancement de la photodégradation de la pièce et en particulier de la douille, et donc de prévenir l'utilisateur de l'éventuelle défectuosité de sa cartouche. Selon l'invention, le témoin est l'agent colorant, et cet agent colorant comprend au moins un colorant phototransformable qui est choisi de manière telle que la phototransformation et la photodégradation de la matrice polyoléfinique sont séquencées.

Selon le document US-3 592 792, il est décrit un film agricole constitué par au moins une matrice polyéthylénique, un colorant noir phototransformable par décoloration, un pigment et un catalyseur d'oxydation. Les différents constituants sont choisis en sorte que les différents phénomènes se déroulent : absorption par le film de la chaleur pour favoriser la germination des graines ; réflexion par le film de la lumière solaire sur les plantes qui se développent ; et photodégradation du film. A cet effet, le film comprend un pigment qui tient le rôle d'opacifiant et le colorant est phototransformable par décoloration du noir vers le blanc.

La présente invention a pour objet un agent ou système colorant permettant, pour une pièce relativement épaisse, en matière plastique, de témoigner du processus de photodégradation de celle-ci.

La solution apportée selon l'invention est destinée à des épaisseurs supérieures à celles d'un film. Elle consiste en un agent colorant conférant à la matrice polyoléfinique une couleur initiale, comprenant au moins un colorant phototransformable dont la phototransformation conduit à la fois :
(a) à une modification visible à l'oeil nu de la coloration initiale, et
(b) à un gain en transparence relative vis-à-vis de la lumière ultra-violette du ou des colorants phototransformables,
la modification (a) étant plus rapide que le gain en transparence (b)
moyennant quoi la phototransformation du ou des colorants débute avant la photodégradation de la matrice polyoléfinique, laquelle photodégradation débute au cours de l'étape de phototransformation de l'agent colorant ou une fois celle-ci achevée.

On peut mettre en évidence la modification (a) et le gain en transparence (b) par analyse spectrométrique UV-visible, comme cela sera montré dans l'exemple 2.

Une pièce de l'invention, par exemple une douille, ayant une couleur initiale, présente, avant la perte de ses caractéristiques techniques rendant son utilisation risquée, un changement de couleur ou une décoloration, parfaitement détectable à l'oeil nu, par l'utilisateur.

Avant d'exposer plus en détails la présente invention, quelques définitions de certains termes employés dans la description sont ci-après apportées :
- par photodégradation d'une matrice polyoléfinique, on entend une photofragmentation initiée par un agent photodégradant, conduisant à de multiples petits fragments qui ne constituent plus dans l'environnement un polluant visuel ;
- par agent colorant, on entend un colorant ou un mélange de colorants, associé éventuellement à des additifs, et dont la fonction première est de colorer ;
- la phototransformation du colorant sera entendue essentiellement comme une modification de la coloration initiale de la matrice polyoléfinique, sous l'effet de la lumière ; cette modification peut se manifester par une décoloration de la matrice et/ou par un changement de coloration ; à titre d'exemple, une matrice selon l'invention présentant une coloration initiale verte, peut, par phototransformation d'un colorant de l'agent colorant, prendre une couleur jaune ;
- par lumière ultraviolette, on entend la lumière dont le domaine est délimité, à une extrémité par les rayons UV solaires qui n'atteignent pas la surface terrestre (longueur d'onde inférieure à 300 nm) et à l'autre extrémité par le visible.

L'agent colorant est avantageusement un colorant organique. En particulier, le colorant phototransformable est choisi parmi les colorants azoïques, en particulier les colorants β-naphtol azoïques. A titre d'exemple, il consiste en un sel de baryum de l'acide benzène-sulfonique-1-chloro-3-méthyl-4-azo(-β-naphtol)-6.

La proportion pondérale de l'agent colorant est préférentiellement comprise entre 0,5% et 2,5% par rapport au poids total de la matrice polyoléfinique.

L'agent photodégradant comprend au moins un agent photoamorceur. Il est avantageusement choisi parmi ceux comprenant un mélange de deux complexes à base de deux cations métalliques tels que par exemple l'ion ferrique et l'ion nickel associés à un ligand tel que par exemple un dialkyl-dithio-carbamate, et ceux comprenant au moins un cation métallique tel que par exemple l'ion ferrique associé à un ligand carboxylate tel que par exemple le stéarate.

La matrice polyoléfinique du matériau constitutif de la pièce de l'invention est avantageusement constituée, sans y être limitée, par un polyéthylène de haute densité ou un polyéthylène basse densité.

La proportion pondérale de l'agent photodégradant est préférentiellement comprise entre 0,5% et 2,0% par rapport au poids total de la matrice polyoléfinique.

Enfin l'invention concerne des utilisations appropriées d'une pièce de l'invention, à savoir une douille photodégradable pour cartouche de chasse ou de sport, une bourre constitutive d'une cartouche de chasse ou de sport, et un projectile pour cartouche de chasse ou de sport, comprenant ou consistant en une pièce objet de l'invention.

Les caractéristiques et avantages d'une pièce de la présente invention sont illustrés par les exemples qui vont suivre, à l'appui des figures annexées où :

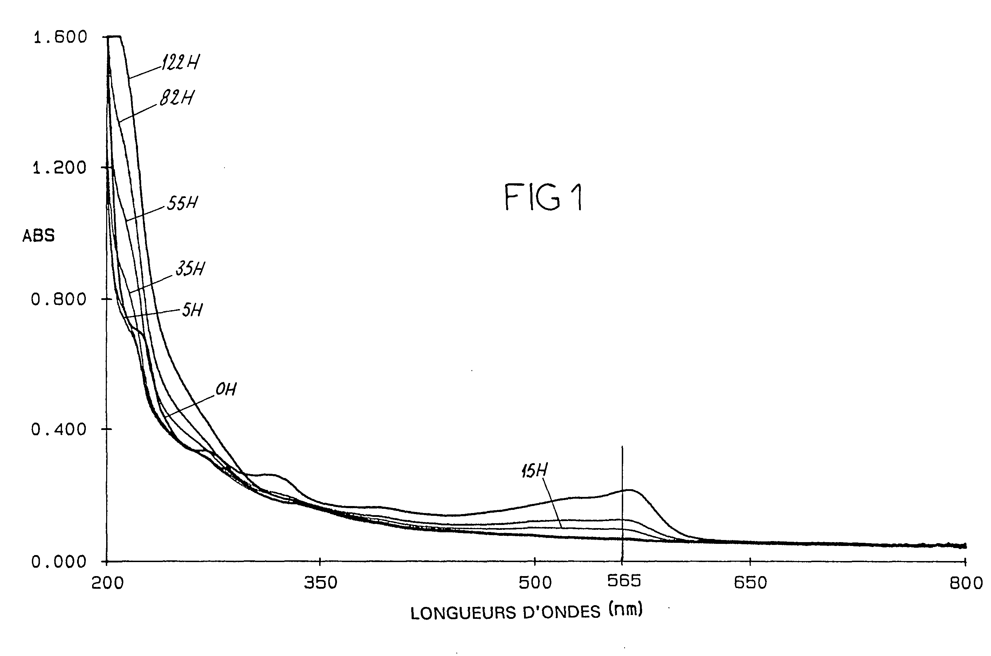

Fig. 1 est un diagramme représentant l'absorption de l'agent colorant utilisé en fonction des longueurs d'onde, à différents temps d'exposition en enceinte SEPAP 12.24 ;

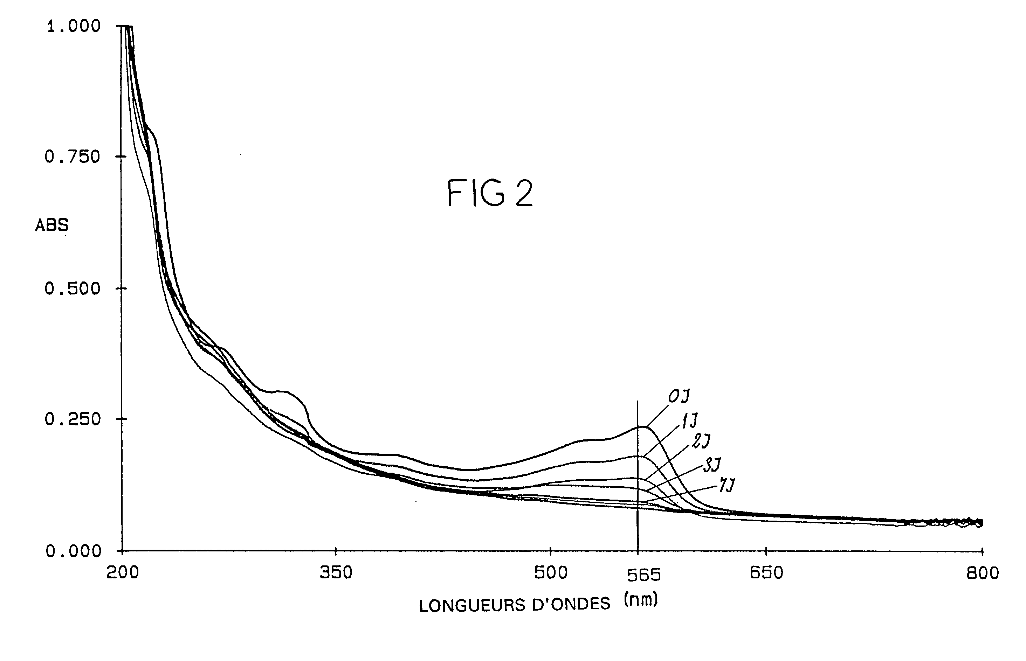

Fig. 2 est un diagramme représentant l'absorption de l'agent colorant utilisé en fonction des longueurs d'onde, à différents temps d'exposition à la lumière naturelle ;

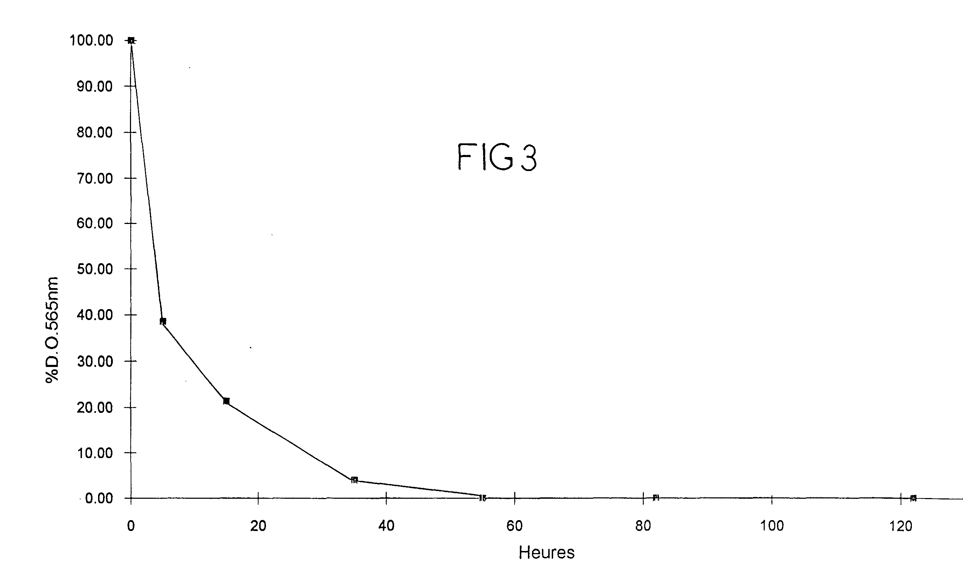

Fig. 3 est un diagramme donnant la diminution de la bande d'absorption, dont le maximum est à 565 nm, de l'agent colorant en fonction du temps d'exposition en enceinte SEPAP 12.24 ;

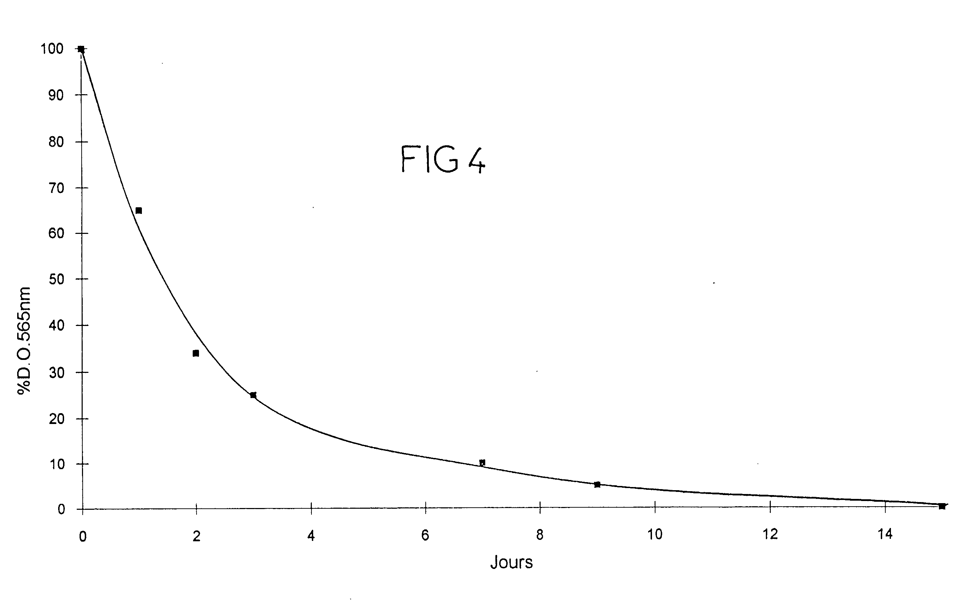

Fig. 4 est un diagramme donnant la diminution du pic maximum d'absorption (565 nm) de l'agent colorant en fonction du temps d'exposition en conditions naturelles ;
Fig. 5 est un diagramme donnant l'absorption de l'agent colorant en fonction des longueurs d'ondes en UV-visible dans la paroi d'une douille.

### EXEMPLE 1: Protocoles expérimentaux suivis pour l'étude de la décoloration et de la dégradation, par exposition à la lumière, de douilles selon l'invention

Le matériau selon l'invention utilisé pour fabriquer les douilles testées ci-après est obtenu par mélange à sec des constituants suivants :
- polyéthylène haute densité,
- agent photodégradant : dialcoyldithiocarbamate,
- agent colorant : colorant rouge photodégradable commercialisé sous la référence CMPF Rouge 341.214 par WILSON/SYNTHECOLOR.

### Préparation des douilles testées :

Les douilles sont fabriquées selon l'un quelconque des procédés suivants :
- procédé d'extrusion avec bi-orientation des chaînes moléculaires ; cette bi-orientation est elle-même réalisée soit par étirage d'un tube primaire à l'aide d'un noyau, soit par étirage puis gonflage à l'aide d'air comprimé ;
- procédé de compression à chaud d'une préforme moulée ;
- procédé d'injection du polyéthylène.

On obtient des douilles d'une épaisseur comprise entre 0,40 et 0,60 mm.

### Exposition des douilles à la lumière polychromatique, aux longueurs d'ondes supérieures à 300 nm (ultra-violet) :

- dans des conditions d'exposition intensive, en enceinte SEPAP 12.24 (60°C) ; l'enceinte SEPAP 12.24 utilisée est une enceinte de photovieillissement (OMYA) qui est à la base de normes françaises et européennes et qui permet de procéder à des tests de photoinstabilité dans des conditions représentatives du vieillissement naturel ;
- dans les conditions d'exposition naturelle (inclinaison 45° - orientation Sud).

### Détection de l'oxydation du polyéthylène :

L'oxydation du polyéthylène est observée en spectroscopie infra-rouge, par le développement de bandes entre 3600 et 3000 cm⁻¹ correspondant aux groupements hydroxyle de produits d'oxydation, et par le développement de bandes importantes entre 1850 et 1600 cm⁻¹ correspondant aux groupements carbonyle de produits d'oxydation.

La vitesse d'oxydation est déterminée par le suivi de l'accumulation des produits ultimes d'oxydation, de type acide carboxylique, absorbant à 1715 cm⁻¹.

### Détection de la décoloration et du gain en transparence dans les UV:

La décoloration est observée à l'oeil nu et confirmée ainsi que le gain en transparance dans les UV, en spectroscopie d'absorption dans les ultra-violets et le visible (UV-visible), par la diminution du maximum d'absorption du pigment utilisé.

La vitesse de décoloration est déterminée à partir de cette diminution.

### EXEMPLE 2 : Influence de l'exposition à la lumière sur les caractéristiques des douilles

### 1) sur la couleur

Des prélèvements sur les douilles ont été effectués après 3, 7 et 15 jours d'exposition dans les conditions naturelles.

La décoloration est observable à l'oeil nu dès le septième jour, et est parfaitement nette dès le neuvième jour.

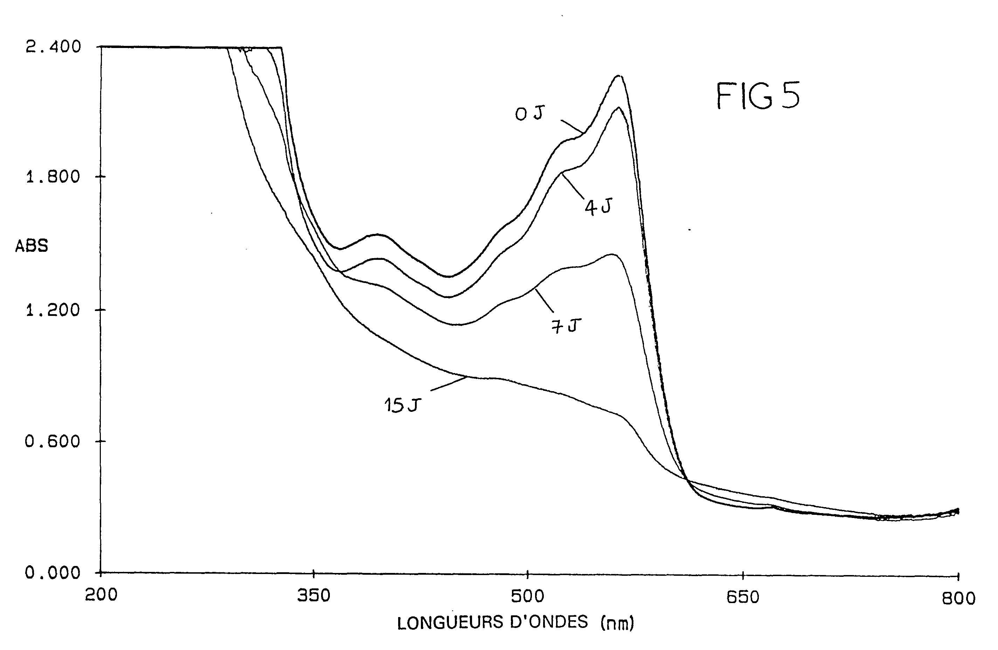

Une analyse spectrométrique UV-visible à travers la paroi représentée sur la Figure 5 montre une consommation de l'ordre de 50% de l'agent colorant après 7 jours et une consommation quasi totale (≥90%) après 15 jours.

Les résultats sur le changement de la couleur initiale des douilles testées (décoloration) visible à l'oeil nu sont en outre rassemblés dans le tableau ci-après, aux différents temps d'exposition à la lumière naturelle suivants : 4, 7, 9, 10, 11, 14, 15, 18 et 20 jours.

### 2) sur les caractéristiques mécaniques

L'évolution des douilles, par observation de prélèvement sous microscope, ne révèle aucune fissuration du prélèvement effectué au quinzième jour.

Les résultats sur la résistance et l'allongement longitudinal des douilles après 4, 7, 9, 10, 11, 14, 15, 18 et 20 jours d'exposition à la lumière naturelle, sont également rassemblés dans le tableau ci-après.

A partir du septième jour la décoloration est détectable à l'oeil nu, et dès le neuvième elle est parfaitement observée, et l'est d'autant plus facilement que la bourre à l'intérieur de la douille apparaît visible par transparence. Ce n'est qu'à partir du quinzième jour, que les caractéristiques de la douille deviennent inacceptables en raison du danger encouru par l'utilisateur.

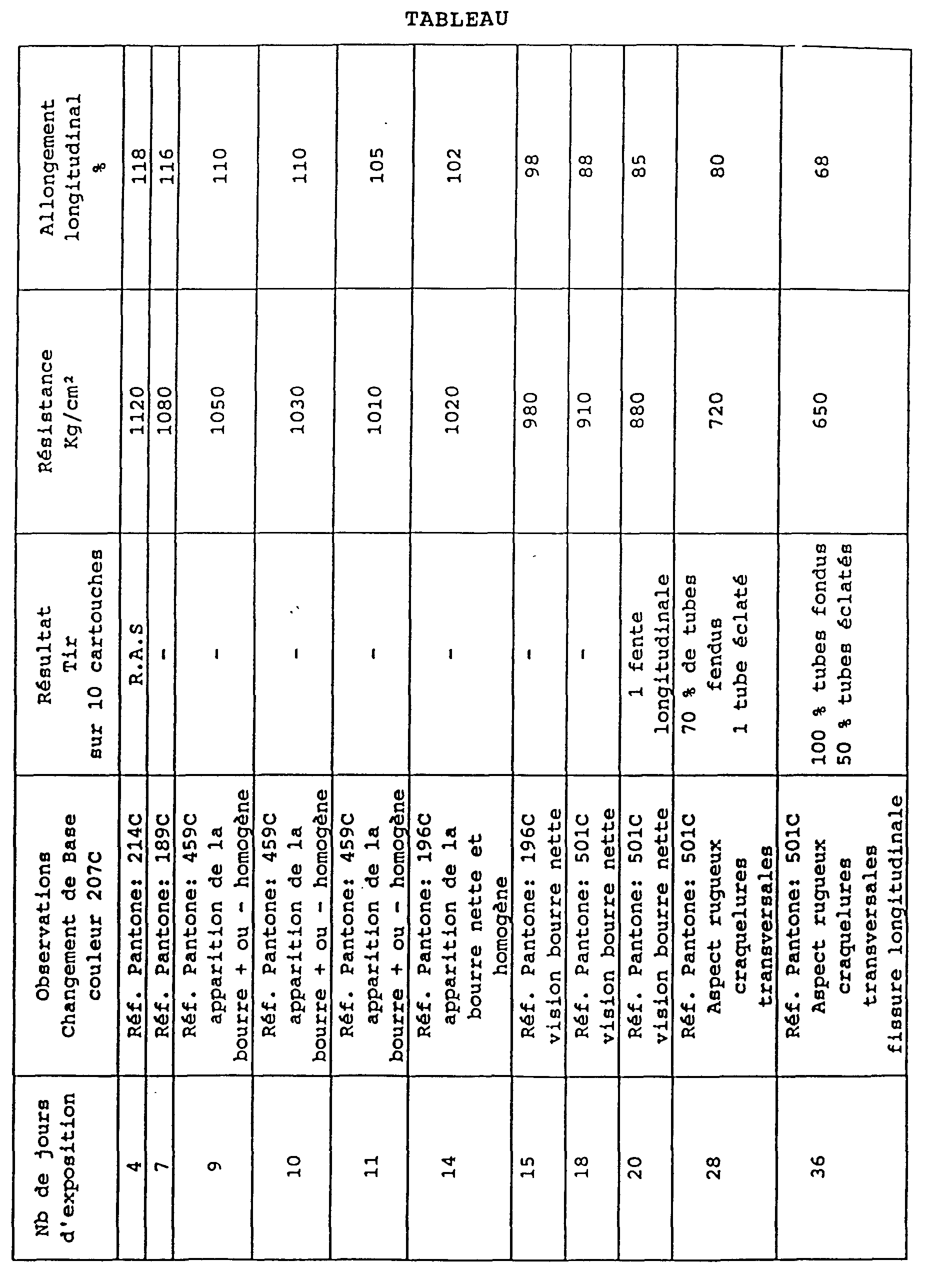

L'effet Pantone fait référence à un nuancier de couleurs de la Société BJ GRANT & Co (France).

## Revendications

1. Pièce, dont les défaillances mécaniques, liées au caractère photodégradable du matériau la constituant, peuvent entraîner, au cours de son utilisation, des accidents de personnes et/ou endommagements graves de matériel, obtenue à partir d'un matériau thermoplastique photodégradable et présentant une épaisseur d'au moins 100 µm, ledit matériau comprenant une matrice polyoléfinique, au moins un agent colorant conférant à la matrice une couleur initiale, et un agent photodégradant de ladite matrice polyoléfinique, ledit agent photodégradant comprenant au moins un agent photoamorceur et un ligand,
**caractérisée en ce que** l'agent colorant comprend au moins un colorant phototransformable dont la phototransformation conduit à la fois à (a) une modification visible à l'oeil nu de la coloration initiale et à (b) un gain en transparence relative vis-à-vis de la lumière ultra-violette, la modification (a) étant plus rapide que le gain en transparence (b), moyennant quoi la phototransformation du ou des colorants débute avant la photodégradation de la matrice polyoléfinique.

2. Pièce selon la revendication 1, **caractérisée en ce que** le colorant phototransformable est organique.

3. Pièce selon la revendication 2, **caractérisée en ce que** le colorant phototransformable est choisi parmi les colorants azoïques, en particulier les colorants β-naphtol azoïques.

4. Pièce selon la revendication 3, **caractérisée en ce que** le colorant phototransformable est un sel de baryum de l'acide benzène-sulfonique-1-chloro-3-méthyl-4-azo(-β-naphtol)-6.

5. Pièce selon la revendication 1, **caractérisée en ce que** la matrice polyoléfinique est choisie parmi les polyéthylènes de haute densité et les polyéthylènes de basse densité.

6. Pièce selon la revendication 1, **caractérisée en ce que** l'agent photodégradant comprend au moins un cation métallique choisi parmi l'ion ferrique et l'ion nickel et un ligand, par exemple un dialkyl-dithio-carbamate.

7. Pièce selon la revendication 1, **caractérisée en ce que** l'agent photodégradant comprend au moins un cation métallique tel que l'ion ferrique et un ligand carboxylate, par exemple le stéarate.

8. Pièce selon la revendication 1, **caractérisée en ce que** la proportion pondérale de l'agent photodégradant est comprise entre 0,5% et 2,0% par rapport au poids total de la matrice polyoléfinique.

9. Pièce selon la revendication 1, **caractérisée en ce que** la proportion pondérale de l'agent colorant est comprise entre 0,5% et 2,5% par rapport au poids total de la matrice polyoléfinique.

10. Pièce selon l'une quelconque des revendications 1 à 9, **caractérisée en ce qu'**elle présente une épaisseur d'au moins 200 µm et **en ce qu'**elle est opaque.

11. Pièce selon l'une quelconque des revendications 1 à 10, consistant en une douille photodégradable pour cartouche de chasse ou de sport.

12. Pièce selon l'une quelconque des revendications 1 à 10, consistant en une bourre constitutive d'une cartouche de chasse ou de sport.

13. Projectile pour cartouche de chasse ou de sport, comprenant une pièce selon l'une quelconque des revendications 1 à 10.

## Claims

1. Component, the mechanical faults of which, related to the photodegradable nature of the material constituting it, can result, during its use, in accidents to people and/or serious damage to equipment, obtained from a photodegradable thermoplastic material and exhibiting a thickness of at least 100 µm, the said material comprising a polyolefin matrix, at least one colouring agent which confers a starting colour on the matrix, and an agent for photodegrading the said polyolefin matrix, the said photodegrading agent comprising at least one photoinitiating agent and a ligand,
**characterized in that** the colouring agent has at least one phototransformable dye, the phototransformation of which results both in (a) a modification visible to the naked eye of the starting coloration and in (b) a relative increase in transparency with respect to ultraviolet light, the modification (a) being faster than the increase in transparency (b), in consideration of which the phototransformation of the dye or dyes begins before the photodegradation of the polyolefin matrix.

2. Component according to Claim 1, **characterized in that** the phototransformable dye is organic.

3. Component according to Claim 2, **characterized in that** the phototransformable dye is chosen from azo dyes, in particular β-naphthol azo dyes.

4. Component according to Claim 3, **characterized in that** the phototransformable dye is a barium salt of 1-chloro-3-methyl-4-azo (-β naphtol)-6 benzenesulphonic acid.

5. Component according to Claim 1, **characterized in that** the polyolefin matrix is chosen from high density polyethylenes and low density polyethylenes.

6. Component according to Claim 1, **characterized in that** the photodegrading agent comprises at least one metal cation chosen from the ferric ion and the nickel ion and one ligand, for example a dialkyldithiocarbamate.

7. Component according to Claim 1, **characterized in that** the photodegrading agent comprises at least one metal cation, such as the ferric ion, and one carboxylate ligand, for example stearate.

8. Component according to Claim 1, **characterized in that** the proportion by weight of the photodegrading agent is between 0.5% and 2.0% with respect to the total weight of the polyolefin matrix.

9. Component according to Claim 1, **characterized in that** the proportion by weight of the colouring agent is between 0.5% and 2.5% with respect to the total weight of the polyolefin matrix.

10. Component according to any one of Claims 1 to 9, **characterized in that** it exhibits a thickness of at least 200 µm and **in that** it is opaque.

11. Component according to any one of Claims 1 to 10, consisting of a photodegradable case for a hunting or sporting cartridge.

12. Component according to any one of Claims 1 to 10, consisting of a constituent wad of a hunting or sporting cartridge.

13. Projectile for a hunting or sporting cartridge comprising a component according to any one of Claims 1 to 10.

## Patentansprüche

1. Teil, dessen mechanische Schwächen, verbunden mit der photodegradierbaren Eigenschaft des Materials, aus dem es gebildet ist, während seiner Benutzung Unfälle von Personen und/oder schwerwiegende Materialbeschädigungen zur Folge haben können, das aus einem photodegradierbaren thermoplastischen Kunststoff erhalten wird und das eine Dicke von mindestens 100 µm aufweist, wobei das Material eine polyolefinische Matrix, zumindest ein Farbagens, das der Matrix eine Initialfarbe verleiht, und ein die polyolefinische Matrix photodegradierendes Agens aufweist, wobei das photodegradierende Agens zumindest ein Photoinitiator-Agens und einen Liganden umfaßt,
**dadurch gekennzeichnet, daß** das Farbagens zumindest einen phototransformierbaren Farbstoff aufweist, dessen Phototransformation gleichzeitig zu (a) einer mit bloßem Auge sichtbaren Änderung der Initialfarbe, und zu (b) einer Zunahme in der relativen Transparenz gegenüber ultraviolettem Licht führt, wobei die Änderung (a) schneller erfolgt als die Zunahme in der Transparenz (b), womit die Phototransformation der Anfangsfarbe oder -farben vor der Photodegradation der polyolefinischen Matrix beginnt.

2. Teil nach Anspruch 1, **dadurch gekennzeichnet, daß** der phototransformierbare Farbstoff organisch ist.

3. Teil nach Anspruch 2, **dadurch gekennzeichnet, daß** der phototransformierbare Farbstoff ausgewählt ist aus den Azofarbstoffen, insbesondere aus den β-Naphthol-Azofarbstoffen.

4. Teil nach Anspruch 3, **dadurch gekennzeichnet, daß** der phototransformierbare Farbstoff ein Bariumsalz der 1-Chlor-3-methyl-4-azo(-β-naphtyl)-6-benzolsulfonsäure ist.

5. Teil nach Anspruch 1, **dadurch gekennzeichnet, daß** die polyolefinische Matrix ausgewählt ist aus den Polyethylenen hoher Dichte und den Polyethylenen niedriger Dichte.

6. Teil nach Anspruch 1, **dadurch gekennzeichnet, daß** das photodegradierende Agens zumindest ein Metallkation, ausgewählt aus Eisenion und Nickelion, und einen Liganden, z.B. ein Dialkyl-dithio-carbamat, aufweist.

7. Teil nach Anspruch 1, **dadurch gekennzeichnet, daß** das photodegradierende Agens zumindest ein Metallkation, wie das Eisenion, und einen Carboxylatliganden, z.B. Stearat, aufweist.

8. Teil nach Anspruch 1, **dadurch gekennzeichnet, daß** der Gewichtsanteil des photodegradierenden Agens im Verhältnis zum Gesamtgewicht der polyolefinischen Matrix bei 0,5 % bis 2,5 % liegt.

9. Teil nach Anspruch 1, **dadurch gekennzeichnet, daß** der Gewichtsanteil des Farbagens im Verhältnis zum Gesamtgewicht der polyolefinischen Matrix bei 0,5 % bis 2,5 % liegt.

10. Teil nach einem der Ansprüche 1 bis 9, **dadurch gekennzeichnet, daß** es eine Dicke von mindestens 200 µm aufweist und daß es undurchsichtig ist.

11. Teil nach einem der Ansprüche 1 bis 10, das in einer photodegradierbaren Hülse für eine Jagd- oder Sportpatrone besteht.

12. Teil nach einem der Ansprüche 1 bis 10, das in einer konstruktionstechnischen Füllung einer Jagd- oder Sportpatrone besteht.

13. Projektil für eine Jagd- oder Sportpatrone, das ein Teil nach einem der Ansprüche 1 bis 10 umfaßt.
